# FASCICULE DE BREVET EUROPEEN

(11) **EP 2 808 874 B1**
(45) Date de publication et mention de la délivrance du brevet: **06.04.2016**
(21) Numéro de dépôt: 14165292.5
(22) Date de dépôt: 18.04.2014
(51) Int. Cl.: H01B 3/44, H01B 7/30

(54) **Câble électrique comprenant au moins une couche électriquement isolante**
Stromkabel, das mindestens eine elektrisch isolierende Schicht besitzt
Electric cable including at least one electrically insulating layer

(30) Priorité: 22.05.2013 FR 1354611
(43) Date de publication de la demande: 03.12.2014
(73) Titulaire: Nexans, 75008 Paris (FR)
(72) Inventeur: Morice, Stéphane, 62790 LEFOREST (FR); Sumera, Rodrigue, 62860 EPINOY (FR)
(74) Mandataire: Feray, Valérie

(56) Documents cités:
- EP-A2- 2 141 709
- WO-A1-97/30460
- US-A- 4 207 427

## Description

La présente invention se rapporte à un câble électrique comprenant au moins une couche électriquement isolante, et à un procédé de fabrication d'un tel câble électrique.

Elle s'applique typiquement mais non exclusivement, aux câbles de transmission électrique à haute tension (notamment de 60 kV à 500 kV) et plus particulièrement aux câbles destinés au transport d'énergie en courant alternatif dont le conducteur est du type Milliken. Les conducteurs du type Milliken sont généralement utilisés pour des câbles de grande section transversale, notamment supérieure à 1000 mm².

Plus particulièrement, l'invention concerne un câble électrique apte à réduire l'effet de peau et à augmenter sa capacité de transport du courant.

L'effet de peau ou effet pelliculaire est un phénomène d'origine électromagnétique, pour lequel le courant a tendance à ne circuler qu'en surface des conducteurs. Ce phénomène existe pour tous les conducteurs parcourus par des courants alternatifs et il provoque la décroissance de la densité de courant au sein du conducteur à mesure que l'on s'éloigne de la périphérie du conducteur.

En vue de réduire cet effet, c'est-à-dire d'augmenter la surface du conducteur pouvant recevoir une densité de courant élevée, des câbles souterrains comportant un conducteur du type Milliken sont traditionnellement utilisés. Ils sont généralement composés de plusieurs éléments conducteurs allongés, notamment de six éléments, présentant une section (transversale) en secteur de cercle, appelés segments ou secteurs. Ces secteurs sont isolés entre eux et disposés de manière à former un conducteur de section circulaire. L'effet de peau est réduit du fait que chaque segment est isolé de son voisin par un matériau non conducteur. Chaque secteur est généralement constitué par des fils métalliques de cuivre ou d'aluminium assemblés entre eux, notamment par toronnage. Le toronnage des fils métalliques individuels dans chacun des segments et l'assemblage en hélice de ces mêmes segments est bien connu sous l'expression « double câblage ». Cependant, ledit double câblage entraîne le passage alternatif de chacun des fils métalliques de l'extérieur du conducteur vers l'intérieur du conducteur. La tension au coeur du câble diffère de celle à la périphérie du câble. De ce fait, il se crée dans chaque segment du câble, un courant transversal entre les fils métalliques situés au coeur du câble et ceux situés en périphérie du câble. Comme la faible résistance de contact entre les fils métalliques adjacents entre eux ne permet pas de stopper le passage du courant électrique d'un fil métallique à un autre, il en résulte une perte d'efficacité de ce type de disposition.

Afin de remédier à ce problème, et ainsi d'obtenir une résistance de contact élevée entre les fils conducteurs adjacents entre eux, une solution consiste à recouvrir chacun des fils métalliques d'une couche électriquement isolante de matière et d'épaisseur appropriées.

Pour ce faire, le document US-4,207,427 propose d'entourer chacun des fils métalliques avec un revêtement isolant, d'une épaisseur comprise entre 4 et 10 µm, composé d'une résine synthétique réticulée. Cette résine comprend une résine polyvinylacétalique réticulée au moyen d'au moins une résine phénolaldéhyde et d'une résine mélamine. L'application dudit revêtement sur le fil métallique consiste en une technique d'émaillage conventionnelle. Le fil métallique est immergé dans un bain contenant ladite résine diluée dans un milieu liquide comprenant du xylène et le fil ainsi revêtu est soumis à un traitement thermique dans une première zone du four à 300°C, puis dans une deuxième zone du four à une température entre 400°C et 500 °C.

Toutefois, ce type de revêtement présente les inconvénients d'être très coûteux et d'avoir une capacité isolante largement supérieure au besoin (la rigidité diélectrique obtenue est d'environ 3000 Volts). En effet, il suffit d'avoir une rigidité diélectrique d'au moins 8 volts pour obtenir une capacité isolante suffisante. Par ailleurs, ledit revêtement est très difficile à ôter lors de la connexion du câble avec une ou plusieurs terminaisons du fait de sa trop forte adhérence au conducteur.

En outre, le procédé de préparation de fils métalliques émaillés de l'art antérieur présente un coût de production élevé. Par ailleurs, il peut induire un recuit partiel du fil métallique puisque le cycle de cuisson s'effectue à des températures élevées, et génère des produits de dégradation toxiques tels que la mélamine et le phénol. Enfin, ce procédé présente le désavantage d'utiliser un milieu liquide comprenant du xylène, difficile à évaporer.

Le but de la présente invention est de pallier les inconvénients des techniques de l'art antérieur en proposant notamment un câble électrique comprenant au moins une couche électriquement isolante présentant de bonnes propriétés d'adhérence et de rigidité diélectrique et de garantir un effet de peau réduit et ainsi une capacité de transport du courant augmentée dans ledit câble électrique.

La présente invention a pour premier objet un câble électrique comprenant un conducteur électrique allongé, s'étendant plus particulièrement le long de l'axe longitudinal dudit câble, comportant en coupe transversale, une pluralité de segments électriquement isolés entre eux, chacun desdits segments isolés comprenant une pluralité de fils métalliques, au moins un desdits fils métalliques dans au moins un desdits segments étant recouvert par au moins une couche électriquement isolante, ledit câble électrique étant caractérisé en ce que ladite couche électriquement isolante est obtenue à partir d'une composition A comprenant au moins un polymère acrylique et au moins un sel de métal de transition.

Grâce au câble électrique de l'invention, l'effet de peau est réduit et la capacité de transport du courant augmentée. En outre, la couche électriquement isolante recouvrant au moins un des fils métalliques présente les avantages d'adhérer correctement audit fil métallique et de l'isoler électriquement. Ladite couche lui confère une bonne tenue en vieillissement en température et une excellente résistance à la corrosion.

Dans un mode de réalisation particulier, la couche électriquement isolante de l'invention a une épaisseur allant de 1 à 20 µm, et de préférence de 4 à 8 µm. Cette très faible épaisseur limite avantageusement la quantité de composition A à utiliser et permet de réduire au maximum l'encombrement du câble.

Dans un exemple de réalisation, le sel de métal de transition de ladite composition A de l'invention, est choisi parmi les sels de chrome (III) et les fluorotitatanes.

En particulier, le sel de chrome (III) peut être le chlorure de chrome (III) hexahydraté.

Par ailleurs, la teneur en sel de chrome (III) peut préférentiellement être inférieure à 1% en poids de la composition A pour des raisons de toxicité.

En outre, il peut être avantageux que les fluorotitanates de la composition A de l'invention soient choisis parmi Na₂TiF₆, K₂TiF₆ et (NH₄)₂TiF₆.

Dans un mode de réalisation particulier, le polymère acrylique de la composition A de l'invention est choisi parmi les polyacryliques et les polyméthacryliques.

En particulier, les polyacryliques sont choisis parmi les polyacrylates d'alkyle, les polyacrylamides et les poly(acide acrylique).

Les polyméthacryliques peuvent être avantageusement choisis parmi les polyméthacrylates d'alkyle, les polyacrylamides, et les poly(acide méthacrylique).

La composition A selon l'invention peut comprendre en outre un milieu liquide tel qu'un diluant et/ou un solvant. Le milieu liquide peut être par exemple de l'eau, ou de préférence de l'eau déminéralisée.

La composition A selon l'invention peut comprendre en outre au moins un pigment organique ou inorganique, afin de permettre d'identifier facilement le produit final.

Dans un mode de réalisation particulier, la composition A conforme à l'invention peut comprendre :
- de 10% à 30% en poids de polymère(s) acrylique(s) et sel(s) de métal de transition,
- de 70% à 90% en poids de milieu liquide, et
- de 0% à 20% en poids de pigment organique ou inorganique.

La présente invention se propose également de mettre en oeuvre un procédé de fabrication d'un câble électrique tel que décrit précédemment dans le premier objet, qui soit simple et économique.

La présente invention a donc pour objet un procédé de fabrication d'un câble électrique telle que défini précédemment dans le premier objet et qui comprend les étapes suivantes :
i) chauffer la surface d'un fil métallique à une température d'au moins 100°C, et
ii) appliquer ladite composition A sur le fil métallique obtenu à l'étape i), pour obtenir ledit fil métallique recouvert par ladite couche électriquement isolante.

Ledit procédé consiste en un procédé de traitement de surface par voie humide et permet de modifier par conversion chimique la surface du fil métallique. Au contact de la composition A de l'invention, le fil métallique est attaqué chimiquement. Des particules de métal ou d'oxydes métalliques en surface dudit fil métallique sont dissoutes et réagissent avec la composition A selon des réactions d'oxydo-réduction et de polymérisation, pour former une couche électriquement isolante qui représente une couche dite de conversion.

Grâce au procédé de l'invention, au moins une couche électriquement isolante peut être facilement formée autour de la surface d'au moins un fil métallique dans au moins un desdits segments. De plus, le procédé conforme à l'invention est simple, économique et rapide. En effet, ledit procédé permet de fournir environ 8 à 100 mètres par minute de fil métallique recouvert de la couche électriquement isolante conforme à l'invention.

De préférence, les étapes i) et/ou ii) peuvent être réalisées en continu sur le fil métallique.

Dans un mode de réalisation particulier, l'étape de chauffage i) est effectuée dans un four conventionnel. A titre d'exemple, l'étape i) est réalisée en chauffant la surface du fil métallique pendant environ 30 secondes dans un four conventionnel dont la température est fixée à environ 500°C.

L'application de la composition A sur le fil métallique selon l'étape ii) du procédé de l'invention s'effectue par des techniques bien connues de l'homme du métier et notamment par immersion ou aspersion.

Dans un mode de réalisation particulier, le procédé de fabrication du câble électrique conforme à l'invention comprend une ou plusieurs étape(s) préalable(s) à l'étape i) consistant à dégraisser et/ou à désoxyder et/ou à décaper la surface dudit fil métallique. L'étape de dégraissage permet de rendre le fil métallique exempt de graisses et d'autres particules organiques. Les étapes de désoxydation et de décapage permettent l'élimination d'oxydes et/ou de particules métalliques autres que celles du métal constituant ledit fil métallique. Ces étapes préalables de préparation de surface permettent ainsi d'éviter l'apparition de défauts de surface tels que des craquelures, des effilochages de la surface, etc... Une bonne préparation de la surface par des moyens chimiques ou mécaniques bien connus de l'homme du métier, donne une meilleure protection et adhérence de la couche électriquement isolante de l'invention.

Ces étapes préalables à l'étape i) du procédé conforme à l'invention sont effectuées préférentiellement par immersion dudit fil métallique dans une solution de dégraissant et/ou une solution de désoxydant et/ou une solution de décapant.

Le procédé conforme à l'invention peut avantageusement comprendre une étape iii), postérieure à l'étape ii), consistant à sécher ledit fil métallique. En particulier, ledit fil métallique peut être séché dans un four conventionnel fixé à une température de 450 °C environ.

Dans un mode de réalisation particulièrement préféré, le procédé de fabrication du câble électrique de l'invention est caractérisé en ce que la température de l'étape i) est comprise entre 110°C et 160°C. En effet, le contrôle de la température lors de cette étape permet de définir l'épaisseur de la couche électriquement isolante qui va recouvrir le fil métallique. Dans cet intervalle de températures, les risques de discontinuité du dépôt et de brûlures et/ou cloquages du revêtement sont limités de façon significative, voire évités.

Le procédé tel que défini ci-dessus peut être mis oeuvre plusieurs fois si l'on souhaite obtenir un fil métallique recouvert de plusieurs couches électriquement isolantes obtenues à partir d'une composition A comprenant au moins un polymère acrylique et au moins un sel de métal de transition.

La présente invention a pour second objet un câble électrique comprenant un conducteur électrique allongé, s'étendant plus particulièrement le long de l'axe longitudinal dudit câble, comportant en coupe transversale, une pluralité de segments électriquement isolés entre eux, chacun desdits segments isolés comprenant une pluralité de fils métalliques, au moins un desdits fils métalliques dans au moins un desdits segments étant recouvert par au moins une couche électriquement isolante, ledit câble électrique étant caractérisé en ce que ladite couche électriquement isolante est obtenue à partir d'une composition B comprenant une poudre thermodurcissable de type polyester.

Grâce au câble électrique ainsi obtenu, l'effet de peau est également réduit et la capacité de transport du courant augmentée. En outre, la couche électriquement isolante recouvrant au moins un des fils métalliques présente les avantages d'adhérer correctement audit fil métallique et de l'isoler électriquement. Ladite couche lui confère une bonne tenue en vieillissement en température et une excellente résistance à la corrosion.

Dans un mode de réalisation particulièrement préféré, la poudre thermodurcissable de type polyester de l'invention peut être un polyester avec un poids moléculaire moyen d'un nombre plus grand que 10000, formé par addition d'unités x= [O-(CH₂)ₙ-OCO-(CH₂)ₘ-CO] et/ou y=[O-(CH₂)ₖ-CO], où la somme n+m et le nombre k sont tels que la température de fusion dudit polyester est strictement supérieure à 80°C. Ce type de polyester permet avantageusement d'obtenir une poudre thermodurcissable de type polyester insensible à l'eau et difficilement hydrolysable.

Dans un mode de réalisation particulier, la couche électriquement isolante de l'invention a une épaisseur allant de 10 µm à 60 µm, et de préférence de 20 à 40 µm.

La composition B selon l'invention peut comprendre en outre au moins un pigment organique ou inorganique afin de permettre d'identifier facilement le produit final.

Selon une première variante, la composition B conforme à l'invention comprend la poudre thermodurcissable de type polyester et optionnellement un pigment organique ou inorganique.

Selon une deuxième variante, la composition B contient uniquement la poudre thermodurcissable de type polyester et optionnellement un pigment organique ou inorganique. A titre d'exemple, la composition B comprend :
- de 80% à 100 % en poids de poudre thermodurcissable de type polyester,
- de 0% à 20% en poids de pigment organique ou inorganique.

De ce fait, comme elle ne contient pas de milieu liquide tel qu'un solvant et/ou un diluant, on évite les égouttements, la formation de bulles et la pollution de l'air et de l'eau lors de son application sur le fil métallique. La couche électriquement isolante ainsi obtenue est plus uniforme, dure et résistante aux impacts.

La présente invention a également pour objet un procédé de fabrication d'un câble électrique tel que défini précédemment dans le second objet. Ledit procédé conforme à l'invention comprend les étapes suivantes :
i) appliquer ladite composition B sur un fil métallique, et
ii) soumettre ledit fil métallique obtenu à l'étape i), à une température suffisante pour thermodurcir la poudre thermodurcissable de type polyester et ainsi obtenir ledit fil métallique recouvert par ladite couche électriquement isolante.

Ainsi, grâce au procédé de l'invention, au moins une couche électriquement isolante peut être facilement et rapidement formée autour de la surface d'au moins un fil métallique dans au moins un desdits segments. En effet, ledit procédé permet de fournir environ 30 à 80 mètres par minute de fil métallique recouvert de la couche électriquement isolante conforme à l'invention.

De préférence, les étapes i) et/ou ii) peuvent être réalisées en continu sur le fil métallique.

Pour effectuer l'application de la composition B selon l'étape i) du procédé conforme à l'invention, on peut utiliser d'une manière manuelle ou automatique, un système de projection ou pulvérisation électrostatique et plus particulièrement un pistolet électrostatique. L'enrobage du fil métallique à l'aide d'un tel système requiert moins de précision de la part de l'opérateur. On peut également utiliser un lit fluidisé standard ou de type électrostatique.

Lorsque la composition B est appliquée sur le fil métallique, ledit fil métallique recouvert de ladite composition B est soumis à un traitement thermique selon l'étape ii) du procédé conforme à l'invention. Pour cette étape, tous les types de fours peuvent être utilisés tels que des fours à convection forcée d'air (chauffage au gaz ou électrique), des fours à infra-rouge, ou des fours combinant les deux systèmes de chauffage. On préfèrera toutefois effectuer le traitement thermique dans un four à infra-rouge (Near Infra Red) puisqu'il permet une réaction de polymérisation plus rapide (de l'ordre de 10 secondes) que lorsqu'un four à convection classique est utilisé dans lequel la vitesse de polymérisation est de l'ordre de 105 secondes.

Lorsqu'un four à convection classique est utilisé seul, le traitement thermique de l'étape ii) est effectué à une température allant de 250°C à 290°C pendant 100 à 120 secondes.

Afin d'augmenter la vitesse de production, ladite composition B peut être soumise à un premier traitement thermique à l'aide d'un four à infra-rouge, puis à un deuxième traitement thermique à l'aide d'un four à convection classique.

Dans ce cas, le premier traitement thermique est effectué à une puissance variant de 2,5 kW à 2,9 kW pendant 6 à 10 secondes, puis le deuxième traitement thermique est effectué à une température allant de 250°C à 290°C pendant 45 à 65 secondes.

Lors de l'étape ii), la composition B comprenant une poudre thermodurcissable de type polyester, fond et s'écoule en une fine couche uniforme réagissant chimiquement pour former un réseau de réticulation à haut poids moléculaire. Une fois la réaction de polymérisation terminée, elle ne se ramollit plus lorsqu'on la chauffe de nouveau.

A l'issue de cette étape ii), une couche pâteuse recouvrant ledit fil métallique est formée.

Dans un mode de réalisation particulier, le procédé de fabrication du câble électrique conforme à l'invention comprend une ou plusieurs étape(s) préalable(s) à l'étape i) consistant à dégraisser et/ou à désoxyder et/ou à décaper la surface dudit fil métallique. Ces étapes préalables de préparation de surface permettent de rendre le fil métallique exempt de tout type de salissure, graisse, oxydes, poussière, qui engendrent généralement des défauts de surface tels que des craquelures, des effilochages de la surface, etc... Une bonne préparation de la surface par des moyens chimiques ou mécaniques bien connus de l'homme du métier, donne une meilleure protection et adhérence de la couche électriquement isolante de l'invention.

Dans un mode de réalisation particulier, le procédé de fabrication du câble électrique conforme à l'invention comprend une étape iii), postérieure à l'étape ii), consistant à refroidir ledit fil métallique. Cette étape permet de ne pas déformer ladite couche pâteuse qui est encore molle à la sortie du four.

Au cours de cette étape iii), ledit fil métallique est laissé refroidir à une température de 80°C environ.

En particulier, ledit fil métallique peut être refroidi par de l'eau dont la température est inférieure à 50°C pour éviter que les fils ainsi revêtus ne collent entre eux.

Le procédé tel que défini ci-dessus peut être mis oeuvre plusieurs fois si l'on souhaite obtenir un fil métallique recouvert de plusieurs couches électriquement isolantes obtenues à partir d'une composition B comprenant une poudre thermodurcissable de type polyester.

Dans la présente invention, les fils métalliques constitutifs d'au moins un segment électriquement isolé du conducteur électrique allongé, ainsi recouverts par la couche électriquement isolante obtenue à partir d'une composition A selon le premier objet de l'invention ou d'une composition B selon le second objet de l'invention, peuvent être assemblés entre eux et/ou com pactés.

Selon une première variante, les fils métalliques constitutifs d'au moins un segment électriquement isolé du conducteur électrique allongé du câble électrique de l'invention, sont des fils métalliques électriquement isolés. En d'autres termes, un segment peut comprendre un ou plusieurs fils isolés recouverts de la couche électriquement isolante selon l'invention et un ou plusieurs fils isolés conventionnels.

De préférence, chacun desdits fils métalliques constitutifs d'au moins un segment électriquement isolé du conducteur électrique allongé de l'invention est recouvert de ladite couche électriquement isolante de l'invention.

De manière encore plus préférée, tous les fils métalliques constitutifs du conducteur électrique allongé du câble électrique de l'invention sont recouverts de ladite couche électriquement isolante de l'invention.

Selon une deuxième variante, une partie seulement des fils métalliques constitutifs d'au moins un segment électriquement isolé du conducteur électrique allongé du câble électrique de l'invention, sont des fils métalliques électriquement isolés. En d'autres termes, un segment peut comprendre un ou plusieurs fils métalliques électriquement isolés et un ou plusieurs fils nus, c'est-à-dire non isolés électriquement.

De préférence, deux tiers desdits fils métalliques constitutifs d'au moins un segment électriquement isolé du conducteur électrique allongé de l'invention sont recouverts de ladite couche électriquement isolante de l'invention, les un tiers restants desdits fils métalliques étant des fils nus et positionnés de telle manière qu'ils ne se touchent pas entre eux.

De manière encore plus préférée, deux tiers desdits fils métalliques constitutifs du conducteur électrique allongé du câble électrique de l'invention sont recouverts de ladite couche électriquement isolante de l'invention, les un tiers restants desdits fils métalliques étant des fils nus et positionnés de telle manière qu'ils ne se touchent pas entre eux.

Le conducteur électrique allongé de l'invention est de préférence en cuivre, en alliage de cuivre, en aluminium ou en alliage d'aluminium.

Plus particulièrement, le câble de l'invention peut être un câble électrique à conducteur Milliken de type câble d'énergie. Dans ce cas, le conducteur électrique allongé de l'invention est entourée par une première couche semi-conductrice, la première couche semi-conductrice étant entourée par une couche électriquement isolante, et la couche électriquement isolante étant entourée par une deuxième couche semi-conductrice, ladite couche électriquement isolante étant différente de la couche électriquement isolante obtenue à partir d'une composition A selon le premier objet de l'invention ou d'une composition B selon le second objet de l'invention.

Dans un mode de réalisation particulier, généralement conforme au câble électrique à conducteur Milliken de type câble d'énergie de l'invention, la première couche semi-conductrice, la couche électriquement isolante et la deuxième couche semi-conductrice constituent une isolation tricouche. En d'autres termes, la couche électriquement isolante est directement en contact physique avec la première couche semi-conductrice, et la deuxième couche semi-conductrice est directement en contact physique avec la couche électriquement isolante.

Dans un mode de réalisation préféré, la première couche semi-conductrice et/ou la deuxième couche semi-conductrice peuvent être respectivement un premier écran semi-conducteur et/ou un deuxième écran semi-conducteur. Lesdits premier et/ou deuxième écrans semi-conducteurs permettent alors d'empêcher la concentration du champ électrique au sein du câble.

Dans un mode de réalisation particulier, la couche électriquement isolante et les première et deuxième couches semi-conductrices du câble de l'invention, peuvent être classiquement des couches réticulées obtenues à partir d'une composition à base de polyoléfine (e.g. polyéthylène).

Le câble électrique de l'invention peut comprendre en outre un écran métallique entourant la deuxième couche semi-conductrice.

Cet écran métallique peut être un écran dit « filaire » composé d'un ensemble de conducteurs en cuivre ou en aluminium arrangé autour et le long de la deuxième couche semi-conductrice, un écran dit « rubané » composé d'un ou de plusieurs rubans métalliques conducteurs en cuivre ou en aluminium posé(s) éventuellement en hélice autour de la deuxième couche semi-conductrice, ou d'un écran dit « étanche » de type tube métallique composé éventuellement de plomb ou d'alliage de plomb et entourant la deuxième couche semi-conductrice. Ce dernier type d'écran permet notamment de faire barrière à l'humidité ayant tendance à pénétrer le câble électrique en direction radiale.

L'écran métallique du câble électrique de l'invention peut comprendre un écran dit « filaire » et un écran dit « étanche » ou un écran dit « filaire » et un écran dit « rubané ».

Tous les types d'écrans métalliques peuvent jouer le rôle de mise à la terre du câble électrique et peuvent ainsi transporter des courants de défaut, par exemple en cas de court-circuit dans le réseau concerné.

En outre, le câble de l'invention peut comprendre une gaine extérieure de protection entourant la deuxième couche semi-conductrice, ou bien entourant plus particulièrement ledit écran métallique lorsqu'il existe. Cette gaine extérieure de protection peut être réalisée classiquement à partir de matériaux thermoplastiques appropriés tels que des HDPE, des MDPE ou des LLDPE ; ou encore des matériaux retardant la propagation de la flamme ou résistant à la propagation de la flamme tel que les PVC. On préfèrera cependant des matériaux retardant la propagation de la flamme ou résistant à la propagation de la flamme qui ne contiennent pas d'halogène, on parle alors de gainage de type HFFR (pour l'anglicisme « *Halogen Free Flame Retardant » ) .*

D'autres couches, telles que des couches gonflantes en présence d'humidité peuvent être ajoutées entre la deuxième couche semi-conductrice et l'écran métallique lorsqu'il existe et/ou entre l'écran métallique et la gaine extérieure lorsqu'ils existent, ces couches permettant d'assurer l'étanchéité longitudinale du câble électrique à l'eau.

D'autres caractéristiques et avantages de la présente invention apparaîtront à la lumière des exemples qui vont suivre en référence aux figures annotées, lesdits exemples et figures étant donnés à titre illustratif et nullement limitatif.
La figure 1 représente de façon schématique un câble électrique comprenant un conducteur électrique central, en coupe transversale, conforme à l'invention.
La figure 2 représente de façon schématique le conducteur électrique central du câble de la figure 1.
La figure 3 représente de façon schématique un des fils métalliques d'un des segments du conducteur électrique central de la figure 2.

Pour des raisons de clarté, seuls les éléments essentiels pour la compréhension de l'invention ont été représentés de manière schématique, et ceci sans respect de l'échelle.

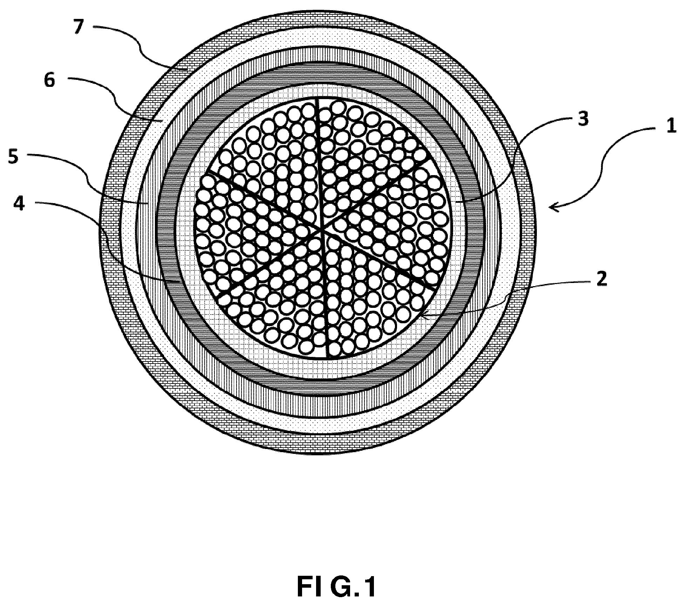

Le câble électrique 1 illustré dans la figure 1 est un câble à haute tension de type Milliken. Il comprend un conducteur électrique allongé 2 s'étendant le long de l'axe longitudinal dudit câble, notamment en cuivre ou en aluminium, et successivement et coaxialement comprend autour de ce conducteur 2, une première couche semi-conductrice 3 dit « couche semi-conductrice interne », une couche électriquement isolante 4, une deuxième couche semi-conductrice 5 dit « couche semi-conductrice externe », un écran métallique 6, et une gaine extérieure de protection 7.

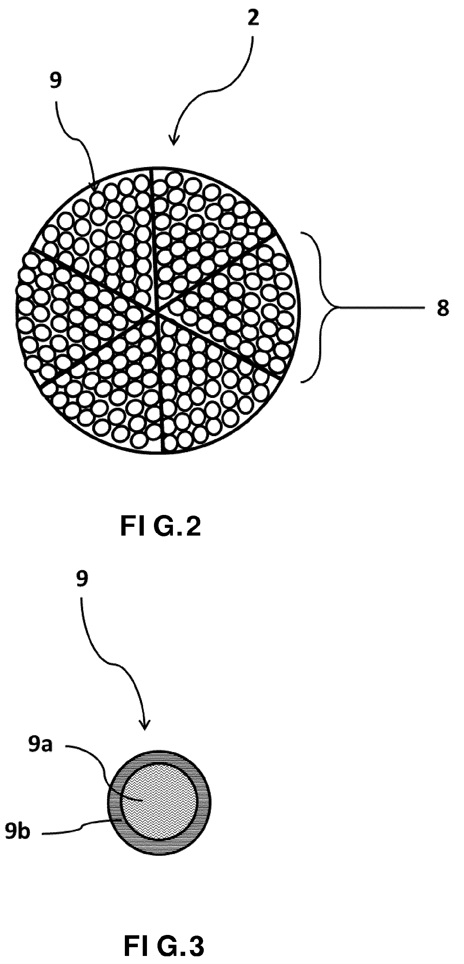

En outre, comme illustré sur la figure 2, le conducteur électrique allongé 2 comporte six segments 8, électriquement isolés entre eux, de forme triangulaire en coupe transversale. Chacun desdits segments isolés 8 comprend une pluralité de fils métalliques électriquement isolés 9.

La figure 3 est un grossissement d'un des fils métalliques électriquement isolés 9 d'un des segments 8 du conducteur électrique central 2 de la figure 2. Cette figure permet de mettre en évidence que le fil métallique électriquement isolé 9 comprend une âme centrale 9a, en cuivre ou en aluminium, entourée par la couche électriquement isolante 9b obtenue à partir d'une composition A selon l'invention.

### Exemples

### 1. Préparation de la composition A et de la couche électriquement isolante conformes au premier objet de l'invention

La composition A a été obtenue en ajoutant 20 % en poids d'une solution de Brugal G50 WHP®, commercialisée par Procoat Tecnologias, à de l'eau déminéralisée.

Afin de montrer les propriétés de l'invention, sept bobines de fil de cuivre de 300 m de longueur et de 2,58 mm de diamètre, ont été recouvertes d'une couche électriquement isolante obtenue à partir de ladite composition A selon le procédé conforme au premier objet de l'invention.

Pour ce faire, la surface des fils métalliques constituant les sept bobines a été préalablement préparée en effectuant :
- un dégraissage électrolytique par immersion desdits fils métalliques dans une solution à 100 g/l de dégraissant Non-acid 701® commercialisée par Atotech à une température de 55°C et avec une densité de courant anodique (d.d.c. anodique) de 20 A/dm²,
- une déoxydation par immersion desdits fils métalliques dans une solution à 80 g/l de désoxydant Metex ACS 1400® commercialisée par Mac Dermid à une température de 35°C, et
- un décapage chimique par immersion desdits fils métalliques dans une solution à 30% en volume d'acide sulfurique à une température de 50 °C.

La durée d'immersion desdits fils métalliques dans chacune des trois solutions varie de 18 secondes à 1 minute et demi environ.

Les étapes suivantes ont été réalisées en continu à l'aide d'une ligne pilote comprenant :
- un premier four (four 1) dont la température a été fixée à 500°C environ,
- une chambre d'aspersion placée à température ambiante, et
- un second four (four 2) dont la température a été fixée à 450°C environ.

La vitesse de défilement du fil métallique constituant chaque bobine lors de son passage dans le four 1, dans la chambre d'aspersion et dans le four 2 est d'environ 2 m/min.

Les fils de cuivre dont la surface a été préalablement préparée, ont donc été chauffés dans le four 1 pendant environ 30 secondes pour atteindre une température d'environ 120°C. Ensuite, les fils de cuivre ont été aspergés dans la chambre d'aspersion par la composition A préalablement préparée, pour obtenir les fils de cuivre desdites bobines recouverts par ladite couche électriquement isolante. Les bobines ont enfin été séchées dans le four 2 pendant environ 30 secondes.

Le tableau 1 présenté ci-dessous indique l'épaisseur moyenne de la couche électriquement isolante recouvrant le fil métallique constituant chaque bobine. Cette épaisseur moyenne a été calculée à partir des coupes microscopiques (grossissement de l'objectif du microscope : 60 fois).

**Tableau 1**

| **Numéro de Bobine** | **Epaisseur (en µm)** |
|---|---|
| 1 | 4,0 |
| 2 | 7,0 |
| 3 | 5,8 |
| 4 | 7,9 |
| 5 | 8,0 |
| 6 | 7,9 |
| 7 | 6,9 |

Ainsi, l'épaisseur de la couche électriquement isolante recouvrant le fil métallique varie de 4 à 8 µm environ lorsque les mêmes conditions opératoires sont utilisées. Cette variation peut être liée au vieillissement des bains utilisés et à l'homogénéité imparfaite de la chaleur dans les fours 1 et 2.

### 2. Tests réalisés sur le fil de cuivre de chaque bobine et recouvert par la couche électriquement isolante conforme au premier objet de l'invention

### 2.1 Tréfilage

Le processus de tréfilage est un procédé de mise en forme à froid qui consiste à étirer un fil en réduisant progressivement son diamètre à travers des outils appelés filières. Le diamètre du fil est alors diminué de 2,58 mm à 2,54 mm grâce à une filière commercialisée par la Société Esteves. Cette diminution ne doit pas excéder le pourcentage d'allongement élastique souhaité qui correspond à 3%. Cela permet de simuler la compression qui s'opère généralement lors de la formation d'un câble électrique.

Il apparaît d'après les résultats du test de tréfilage, que les fils métalliques recouverts de la couche électriquement isolante conforme à l'invention se tréfilent bien. Ladite couche électriquement isolante reste sur toute la surface du fil sans présenter de discontinuités, ce qui traduit une bonne adhérence de ladite couche au fil métallique. De plus, la couche électriquement isolante de l'invention possède les aptitudes requises pour résister à la force de compression causée lors de la formation de câble.

### 2.2 Mesures de rigidités diélectriques

La rigidité diélectrique est un procédé qui permet d'indiquer la capacité isolante de la couche électriquement isolante conforme à l'invention recouvrant le fil de cuivre de chacune des bobines. Elle consiste à mesurer la tension de claquage (en volt) à laquelle le courant traverse la couche isolante. La rigidité avant et après tréfilage doit être au minimum de 8 volts afin d'avoir une capacité isolante suffisante.

Un générateur de courant commercialisé par la Société Conrad et fournissant une tension de 0 à 15 volts a été utilisé. La borne positive du générateur a été reliée à une partie du fil de cuivre non recouverte par la couche électriquement isolante de l'invention. La partie du fil de cuivre comprenant la couche électriquement isolante de l'invention a ensuite été recouverte par une couche d'aluminium d'épaisseur 1 cm, puis a été connectée à la borne négative du générateur. Le courant a été augmenté progressivement jusqu'à apparition d'une tension, traduisant la valeur de la rigidité. Trois mesures ont été réalisées avant et après tréfilage.

Le tableau 2 présenté ci-dessous indique les rigidités diélectriques obtenues avant et après tréfilage.

**Tableau 2**

| **Numéro de bobine** | **Rigidité diélectrique avant tréfilage (Volts)** | | | **Rigidité diélectrique après tréfilage (Volts)** | | |
|---|---|---|---|---|---|---|
| | **Essai 1** | **Essai 2** | **Essai 3** | **Essai 1** | **Essai 2** | **Essai 3** |
| **1** | 15 | 15 | 15 | 15 | 15 | 15 |
| **2** | 15 | 15 | 15 | 15 | 15 | 15 |
| **3** | 15 | 15 | 15 | 15 | 15 | 15 |
| **4** | 15 | 15 | 15 | 15 | 15 | 15 |
| **5** | 15 | 15 | 15 | 15 | 15 | 15 |
| **6** | 15 | 15 | 15 | 15 | 15 | 15 |
| **7** | 15 | 15 | 15 | 15 | 15 | 15 |

Il apparaît d'après le tableau 2 que la rigidité diélectrique obtenue est suffisante que ce soit avant tréfilage ou après tréfilage.

### 2.3 Test d'enroulement

Ce test permet d'analyser la tenue mécanique de la couche électriquement isolante de l'invention et ainsi sa capacité à se craquer suite à l'application d'une modification de forme.

Au cours du test, le fil métallique a été enroulé autour de son propre diamètre de plusieurs spires collées les unes aux autres. Un standard interne impose une résistance du revêtement sur un minimum de 3 spires collées les unes aux autres.

Le test a été réalisé plusieurs fois et n'a montré aucune craquelure.

### 2.4 Mesures de tenue à la température

La couche isolante conforme au premier objet de l'invention présente une tenue aux températures de 105°C et 120°C respectivement de 20 jours et 10 jours en gardant les mêmes caractéristiques. Ces mesures ont été effectuées avec des étuves ventilées.

En outre, la couche électriquement isolante de l'invention permet de protéger le fil métallique contre la corrosion pendant plus de 1000 heures au contact d'un brouillard salin.

### 3. Préparation de la composition B et de la couche électriquement isolante conformes au second objet de l'invention

La composition B comprenant une poudre thermodurcissable de type polyester utilisée est une composition commercialisée par la société Dupont sous la dénomination commerciale Alesta® SPEED.

Afin de montrer les propriétés de l'invention, trois bobines de fil de cuivre de 300 m (bobines N°1 et N°3) et de 900 m (bobine N°2) de longueur, et de 2,58 mm de diamètre, ont été recouvertes d'une couche électriquement isolante obtenue à partir de ladite composition B selon le procédé conforme au second objet de l'invention.

Pour ce faire, la surface des fils métalliques constituant les trois bobines a été préalablement préparée en effectuant :
- un dégraissage électrolytique par immersion desdits fils métalliques dans une solution à 100 g/l de dégraissant Non-acid 701® commercialisée par Atotech à une température de 55°C et avec une densité de courant anodique (d.d.c. anodique) de 20 A/dm²,
- une déoxydation par immersion desdits fils métalliques dans une solution à 80 g/l de désoxydant Metex ACS 1400® commercialisée par Mac Dermid à une température de 35°C, et
- un décapage chimique par immersion desdits fils métalliques dans une solution à 30% en volume d'acide sulfurique à une température de 50 °C.

La durée d'immersion desdits fils métalliques dans chacune des trois solutions varie de 18 secondes à 1 minute et demi environ.

Les étapes suivantes ont été réalisées en continu à l'aide d'une ligne pilote comprenant :
- une cabine de peinture placée à température ambiante,
- un premier four NEAR commercialisé par la société Heraus (four 1) dont la puissance a été fixée à 2,7 Kw,
- un second four à convection classique (four 2) dont la température a été fixée à 280°C environ,
- un jet d'eau pour le refroidissement dont la température a été fixée à 18°C environ.

La vitesse de défilement du fil métallique constituant chaque bobine lors de son passage dans la cabine de peinture, le four 1, le four 2 et le bain de refroidissement est d'environ 7 m/min.

Les fils de cuivre dont la surface a été préalablement préparée, ont donc été aspergés par la composition B dans la cabine de peinture à l'aide d'un pistolet. Le pistolet est placé à environ 1 mètre de l'entrée de la cabine de peinture. Le rendement est d'environ 95%.

Les fils de cuivre ainsi recouverts de ladite composition B ont été soumis à un traitement thermique permettant de thermodurcir la poudre thermodurcissable de type polyester, à savoir :
- le fil métallique constituant la bobine N°1 est passé seulement dans le four 2 pendant 105 secondes, et
- les fils métalliques constituant les bobines N°2 et N°3, sont passés dans le four 1 pendant 6 secondes environ puis dans le four 2 pendant 50 secondes.

Contrairement au four à convection classique (four 2), le four NEAR (four 1) permet d'atteindre des températures très élevées.

Les bobines N°1 à N°3 sont ensuite refroidies avec de l'eau dont la température est fixée à 18°C, de manière à éviter tout collage.

Le tableau 3 présenté ci-dessous indique l'épaisseur moyenne de la couche électriquement isolante recouvrant le fil métallique constituant chaque bobine. Cette épaisseur moyenne a été calculée à partir des coupes microscopiques (grossissement de l'objectif du microscope : 60 fois).

**Tableau 3**

| **Numéro de Bobine** | **Epaisseur (en µm)** |
|---|---|
| **1** | 16,0 |
| **2** | 45,5 |
| **3** | 28,3 |

Ainsi, l'épaisseur moyenne de la couche électriquement isolante recouvrant le fil métallique varie de 16 à 46 µm environ.

### 4. Tests réalisés sur le fil de cuivre de chaque bobine et recouvert par la couche électriquement isolante conforme au second objet de l'invention

### 4.1 Tréfilage

Les expériences de tréfilage ont été effectuées comme dans l'exemple 2.1.

Il apparaît d'après les résultats du test que les fils métalliques recouverts de la couche électriquement isolante conforme au second objet de l'invention se tréfilent bien. Ladite couche électriquement isolante reste sur toute la surface du fil sans présenter de discontinuités, ce qui traduit une bonne adhérence de ladite couche au fil métallique. De plus, la couche électriquement isolante de l'invention possède les aptitudes requises pour résister à la force de compression causée lors de la formation de câble.

### 4.2 Mesures de rigidités diélectriques

Les expériences de rigidités diélectriques obtenues avant et après tréfilage et avant et après vieillissement des fils métalliques recouverts de la couche électriquement isolante, ont été effectuées comme dans l'exemple 2.2.

Le tableau 4-1 présenté ci-dessous indique les rigidités diélectriques obtenues avant vieillissement des fils métalliques avant et après tréfilage.

**Tableau 4-1**

| **Numéro de bobine** | **Rigidité diélectrique avant tréfilage (Volts)** | | | **Rigidité diélectrique après tréfilage (Volts)** | | |
|---|---|---|---|---|---|---|
| | **Essai 1** | **Essai 2** | **Essai 3** | **Essai 1** | **Essai 2** | **Essai 3** |
| **1** | 15 | 15 | 15 | 15 | 15 | 15 |
| **2** | 15 | 15 | 15 | 15 | 15 | 15 |
| **3** | 15 | 15 | 15 | 15 | 15 | 15 |

Il apparaît que la rigidité diélectrique obtenue est toujours d'environ 15 volts. Elle est donc suffisante que ce soit avant tréfilage ou après tréfilage lorsque les fils métalliques recouverts de la couche électriquement isolante n'ont pas subi de vieillissement en température.

Le tableau 4-2 présenté ci-dessous indique les rigidités diélectriques obtenues après vieillissement en température des fils métalliques recouverts de la couche électriquement isolante à une température de 105°C pendant 20 jours, avant et après tréfilage.

**Tableau 4-2**

| **Numéro de bobine** | **Rigidité diélectrique avant tréfilage (Volts)** | | | **Rigidité diélectrique après tréfilage (Volts)** | | |
|---|---|---|---|---|---|---|
| | **Essai 1** | **Essai 2** | **Essai 3** | **Essai 1** | **Essai 2** | **Essai 3** |
| **1** | 15 | 15 | 15 | 15 | 15 | 15 |
| **2** | 15 | 15 | 15 | 15 | 15 | 15 |
| **3** | 15 | 15 | 15 | 15 | 15 | 15 |

Il apparaît que la rigidité diélectrique obtenue est toujours d'environ 15 volts. Elle est donc suffisante que ce soit avant tréfilage ou après tréfilage lorsque les fils métalliques recouverts de la couche électriquement isolante ont subi un vieillissement en température.

### 4.3 Test d'enroulement

Le test a été réalisé plusieurs fois comme dans l'exemple 2.3 et n'a montré aucune craquelure (fil de diamètre 2,7 mm).

### 4.4 Mesures de tenue à la température

Sa tenue à la température de 90°C est d'au moins 20 jours.

## Revendications

1. Câble électrique (1) comprenant un conducteur électrique allongé (2) comportant en coupe transversale, une pluralité de segments électriquement isolés entre eux (8), chacun desdits segments isolés (8) comprenant une pluralité de fils métalliques (9a), au moins un desdits fils métalliques (9a) dans au moins un desdits segments (8) étant recouvert par au moins une couche électriquement isolante (9b), ledit câble électrique (1) étant **caractérisé en ce que** ladite couche électriquement isolante (9b) est obtenue à partir d'une composition A comprenant au moins un polymère acrylique et au moins un sel de métal de transition.

2. Câble électrique (1) selon la revendication 1, **caractérisé en ce que** ladite couche électriquement isolante (9b) a une épaisseur allant de 4 à 8 µm.

3. Câble électrique (1) selon la revendication 1 ou 2, **caractérisé en ce que** le sel de métal de transition est choisi parmi les sels de chrome (III) et les fluorotitatanes.

4. Câble électrique (1) selon la revendication 3, **caractérisé en ce que** le sel de chrome (III) est le chlorure de chrome (III) hexahydraté.

5. Câble électrique (1) selon la revendication 3, **caractérisé en ce que** les fluorotitanates sont choisis parmi Na₂TiF₆, K₂TiF₆ et (NH₄)₂TiF₆.

6. Câble électrique (1) selon l'une quelconque des revendications précédentes, **caractérisé en ce que** le polymère acrylique est choisi parmi les polyacryliques et les polyméthacryliques.

7. Câble électrique (1) selon la revendication 6, **caractérisé en ce que** les polyacryliques sont choisis parmi les polyacrylates d'alkyle, les polyacrylamides et les poly(acide acrylique).

8. Câble électrique (1) selon la revendication 6, **caractérisé en ce que** les polyméthacryliques sont choisis parmi les polyméthacrylates d'alkyle, les polyacrylamides, et les poly(acide méthacrylique).

9. Câble électrique (1) selon l'une quelconque des revendications précédentes, **caractérisé en ce que** ladite composition A comprend en outre un milieu liquide.

10. Câble électrique (1) selon l'une quelconque des revendications précédentes, **caractérisé en ce que** la composition A comprend en outre au moins un pigment organique ou inorganique.

11. Câble électrique (1) selon l'une quelconque des revendications précédentes, **caractérisé en ce que** deux tiers desdits fils métalliques (9a) constitutifs d'au moins un segment électriquement isolé (8) du conducteur électrique allongé (2) sont recouvert de ladite couche électriquement isolante (9b), les un tiers restants desdits fils métalliques étant des fils nus et positionnés de telle manière qu'ils ne se touchent pas entre eux.

12. Câble électrique (1) selon l'une quelconque des revendications précédentes, **caractérisé en ce que** chacun desdits fils métalliques (9a) constitutifs d'au moins un segment électriquement isolé (8) du conducteur électrique allongé (2) est recouvert de ladite couche électriquement isolante (9b).

13. Câble électrique (1) selon l'une quelconque des revendications précédentes, **caractérisé en ce que** tous les fils métalliques (9a) constitutifs du conducteur électrique allongé (2) sont recouvert de ladite couche électriquement isolante (9b).

14. Câble électrique (1) selon l'une quelconque des revendications précédentes, **caractérisé en ce que** ledit conducteur électrique allongé (2) est entouré par une première couche semi-conductrice (3), la première couche semi conductrice (3) étant entourée par une couche électriquement isolante (4), et la couche électriquement isolante (4) étant entourée par une deuxième couche semi conductrice (5), ladite couche électriquement isolante (4) étant différente de la couche électriquement isolante (9b).

15. Procédé de fabrication d'un câble électrique (1) selon l'une quelconque des revendications précédentes, **caractérisé en ce que** le procédé comprend les étapes suivantes :
i) chauffer la surface d'un fil métallique (9a) à une température d'au moins 100°C, et
ii) appliquer ladite composition A sur le fil métallique (9a) obtenu à l'étape i), pour obtenir ledit fil métallique (9a) recouvert par ladite couche électriquement isolante (9b).

16. Procédé de fabrication d'un câble électrique (1) selon la revendication 15, **caractérisé en ce qu'**il comprend une étape préalable à l'étape i) consistant à dégraisser et/ou à désoxyder et/ou à décaper la surface dudit fil métallique (9a).

17. Procédé de fabrication d'un câble électrique (1) selon la revendication 15 ou 16, **caractérisé en ce qu'**il comprend une étape iii), postérieure à l'étape ii), consistant à sécher ledit fil métallique (9a) recouvert par ladite couche électriquement isolante (9b).

18. Procédé de fabrication d'un câble électrique (1) selon l'une quelconque des revendications 15 à 17, **caractérisé en ce que** la température de l'étape i) est comprise entre 110°C et 160°C.

## Patentansprüche

1. Stromkabel (1), umfassend einen länglichen elektrischen Leiter (2), der im Querschnitt eine Vielzahl untereinander elektrisch isolierter Segmente (8) aufweist, wobei jedes der isolierten Segmente (8) eine Vielzahl von Metalldrähten (9a) umfasst, wobei mindestens einer der Metalldrähte (9a) in mindestens einem der Segmente (8) von mindestens einer elektrisch isolierenden Schicht (9b) bedeckt ist, wobei das Stromkabel (1) **dadurch gekennzeichnet ist, dass** die elektrisch isolierende Schicht (9b) aus einer Zusammensetzung A hergestellt ist, die mindestens ein Acrylpolymer und mindestens ein Salz eines Übergangsmetalls umfasst.

2. Stromkabel (1) nach Anspruch 1, **dadurch gekennzeichnet, dass** die elektrisch isolierende Schicht (9b) eine Dicke von 4 bis 8 µm hat.

3. Stromkabel (1) nach Anspruch 1 oder 2, **dadurch gekennzeichnet, dass** das Salz des Übergangsmetalls aus den Chromsalzen (III) und den Fluortitatanen ausgewählt ist.

4. Stromkabel (1) nach Anspruch 3, **dadurch gekennzeichnet, dass** das Chromsalz (III) hexahydratiertes Chromchlorid (III) ist.

5. Stromkabel (1) nach Anspruch 3, **dadurch gekennzeichnet, dass** die Fluortitanate aus Na₂TiF₆, K₂TiF₆ und (NH₄)2TiF₆ ausgewählt sind.

6. Stromkabel (1) nach einem der vorangehenden Ansprüche, **dadurch gekennzeichnet, dass** das Acrylpolymer aus den Polyacrylen und den Polymethacrylen ausgewählt ist.

7. Stromkabel (1) nach Anspruch 6, **dadurch gekennzeichnet, dass** die Polyacryle aus den Alkylpolyacrylaten, den Polyacrylamiden und den Polyacrylsäuren ausgewählt sind.

8. Stromkabel (1) nach Anspruch 6, **dadurch gekennzeichnet, dass** die Polymethacryle aus den Alkylpolymethacrylaten, den Polyacrylamiden und den Polymethacrylsäuren ausgewählt sind.

9. Stromkabel (1) nach einem der vorangehenden Ansprüche, **dadurch gekennzeichnet, dass** die Zusammensetzung A ferner ein flüssiges Medium umfasst.

10. Stromkabel (1) nach einem der vorangehenden Ansprüche, **dadurch gekennzeichnet, dass** die Zusammensetzung A ferner mindestens ein organisches oder anorganisches Pigment umfasst.

11. Stromkabel (1) nach einem der vorangehenden Ansprüche, **dadurch gekennzeichnet, dass** zwei Drittel der Metalldrähte (9a), die mindestens ein elektrisch isoliertes Segment (8) des länglichen elektrischen Leiters (2) bilden, mit der elektrisch isolierenden Schicht (9b) bedeckt sind, wobei ein restliches Drittel der Metalldrähte Blankdrähte sind und derart positioniert, dass sie sich nicht gegenseitig berühren.

12. Stromkabel (1) nach einem der vorangehenden Ansprüche, **dadurch gekennzeichnet, dass** jeder der Metalldrähte (9a), die mindestens ein elektrisch isoliertes Segment (8) des länglichen elektrischen Leiters (2) bilden, mit der elektrisch isolierenden Schicht (9b) bedeckt ist.

13. Stromkabel (1) nach einem der vorangehenden Ansprüche, **dadurch gekennzeichnet, dass** alle Metalldrähte (9a), die den länglichen elektrischen Leiters (2) bilden, mit der elektrisch isolierenden Schicht (9b) bedeckt sind.

14. Stromkabel (1) nach einem der vorangehenden Ansprüche, **dadurch gekennzeichnet, dass** der längliche elektrische Leiter (2) von einer ersten halbleitenden Schicht (3) umgeben ist, wobei die erste halbleitende Schicht (3) von einer elektrisch isolierenden Schicht (4) umgeben ist und die elektrisch isolierende Schicht (4) von einer zweiten halbleitenden Schicht (5) umgeben ist, wobei sich die elektrisch isolierende Schicht (4) von der elektrisch isolierenden Schicht (9b) unterscheidet.

15. Herstellungsverfahren eines Stromkabels (1) nach einem der vorangehenden Ansprüche, **dadurch gekennzeichnet, dass** das Verfahren die folgenden Schritte umfasst:
i) Erwärmen der Oberfläche eines Metalldrahts (9a) auf eine Temperatur von mindestens 100 °C, und
ii) Auftragen der Zusammensetzung A auf den in Schritt i) hergestellten Metalldraht (9a), um den mit der elektrisch isolierenden Schicht (9b) bedeckten Metalldraht (9a) zu erhalten.

16. Herstellungsverfahren eines Stromkabels (1) nach Anspruch 15, **dadurch gekennzeichnet, dass** es einen Schritt vor Schritt i) umfasst, der darin besteht, die Oberfläche des Metalldrahts (9a) zu entfetten und/oder abzuzundern.

17. Herstellungsverfahren eines Stromkabels (1) nach Anspruch 15 oder 16, **dadurch gekennzeichnet, dass** es einen Schritt iii) nach Schritt ii) umfasst, der darin besteht, den mit der elektrisch isolierenden Schicht (9b) bedeckten Metalldraht (9a) zu trocknen.

18. Herstellungsverfahren eines Stromkabels (1) nach einem der Ansprüche 15 bis 17, **dadurch gekennzeichnet, dass** die Temperatur von Schritt i) zwischen 110 °C und 160 °C inklusive ist.

## Claims

1. An electric cable (1), comprising an elongated electric conductor (2) including in a cross-section, a plurality of segments (8) electrically insulated from each other, each of said insulated segments (8) comprising a plurality of metal wires (9a), at least one of said metal wires (9a) in at least one of said segments (8) being covered with at least one electrically insulating layer (9b), said electric cable (1) being **characterized in that** said electrically insulating layer (9b) is obtained from a composition A comprising at least one acrylic polymer and at least one salt of a transition metal.

2. The electric cable (1) according to claim 1, **characterized in that** said electrically insulating layer (9b) has a thickness ranging from 4 to 8 µm.

3. The electric cable (1) according to claim 1 or 2, **characterized in that** the transition metal salt is selected from among chromium (III) salts and fluorotitanates.

4. The electric cable (1) according to claim 3, **characterized in that** the chromium(III) salt is chromium(III) chloride hexahydrate.

5. The electric cable (1) according to claim 3, **characterized in that** the fluorotitanates are selected from among Na₂TiF₆, K₂TiF₆ and (NH₄)₂TiF₆.

6. The electric cable (1) according to any of the preceding claims, **characterized in that** the acrylate polymer is selected from among polyacrylics and polymethacrylics.

7. The electric cable (1) according to claim 6, **characterized in that** the polyacrylics are selected from among alkyl polyacrylates and polyacrylic acids.

8. The electric cable (1) according to claim 6, **characterized in that** the polymethacrylics are selected from among alkyl polymethacrylates, polyacrylamides and polymethacrylic acids.

9. The electric cable (1) according to any of the preceding claims, **characterized in that** said composition A further comprises a liquid medium.

10. The electric cable (1) according to any of the preceding claims, **characterized in that** the composition A further comprises at least one organic or inorganic pigment.

11. The electric cable (1) according to any of the preceding claims, **characterized in that** two thirds of said constitutive metal wires (9a) of at least one electrically insulated segment (8) of the elongated electric conductor (2) are covered with said electrically insulating layer (9b), the remaining one third of said metal wires being exposed wires and positioned so that they do not touch each other.

12. The electric cable (1) according to any of the preceding claims, **characterized in that** each of said constitutive metal wires (9a) of at least one electrically insulated segment (8) of the elongated electric conductor (2) is covered with said electrically insulating layer (9b).

13. The electric cable (1) according to any of the preceding claims, **characterized in that** all said constitutive metal wires (9a) of the elongated electric conductor (2) is covered with said electrically insulating layer (9b).

14. The electric cable (1) according to any of the preceding claims, **characterized in that** said elongated electric conductor (2) is surrounded by a first semiconducting layer (3), the first semiconducting layer (3) being surrounded by an electrically insulating layer (4), and the electrically insulating layer (4) being surrounded by a second semiconducting layer (5), said electrically insulating layer (4) being different from the electrically insulating layer (9b).

15. A method for manufacturing an electric cable (1) according to any of the preceding claims, **characterized in that** the method comprises the following steps:
i) heating the surface of a metal wire (9a) to a temperature of at least 100°C, and
ii) applying said composition A on the metal wire (9a) obtained in step i), in order to obtain said metal wire (9a) covered with said electrically insulating layer (9b).

16. The method for manufacturing an electric cable (1) according to claim 15, **characterized in that** it comprises a step prior to step i) consisting of degreasing and/or deoxidizing and/or stripping the surface of said metal wire (9a).

17. The method for manufacturing an electric cable (1) according to claim 15 or 16, **characterized in that** it comprises a step iii), after step ii), consisting of drying said metal wire (9a) covered with said electrically insulating layer (9b).

18. The method for manufacturing an electric cable (1) according to any of claims 15 to 17, characterizing that the temperature of step i) is comprised between 110°C and 160°C.
